# EUROPÄISCHE PATENTANMELDUNG

(11) **EP 1 902 881 A2**
(43) Veröffentlichungstag der Anmeldung: **26.03.2008**
(21) Anmeldenummer: 07015138.6
(22) Anmeldetag: 02.08.2007
(51) Int. Cl.: B60J 3/02

(54) **Sonnenblende**

(30) Priorität: 20.09.2006 DE 102006044760
(71) Anmelder: HAPPICH Fahrzeug- und Industrieteile GmbH, 42285 Wuppertal (DE)
(72) Erfinder: Rahm, Werner, 42281 Wuppertal (DE); Hibben, Michael, 42929 Wermelskirchen (DE)

(57) **Zusammenfassung**

Die Erfindung bezieht sich auf eine Sonnenblende (10) für Fahrzeuge mit einem Sonnenblendenkörper (11), der wenigstens eine mit einer am Fahrzeugrahmen befestigten Halteeinrichtung (12) zusammenwirkende Lagereinrichtung (13) umfasst, sowie ein Verstärkungselement (14) zur Stabilisierung dieses Sonnenblendenkörpers (11). Es ist dabei erfindungsgemäß vorgesehen, dass der Sonnenblendenkörper (11) als rahmenloser Sonnenblendenkörper (11) mit wenigstens einem randseitig angebrachten, insbesondere aufgesteckten Lagerelement (15) ausgebildet ist, wobei dieses Lagerelement (15) an einer ersten Seite zur Aufnahme der am Fahrzeugrahmen befestigten Halteeinrichtung (12) und an der anderen Seite zur Aufnahme eines sich längs des rahmenlosen Sonnenblendenkörpers (11) erstreckenden Stabilisierungselements (16) als Verstärkungselement (14) ausgebildet ist, wobei das Stabilisierungselement (16) im Bereich seines dem Lagerelements (15) diametral gegenüberliegenden Endes mit dem rahmenlosen Sonnenblendenkörper (11) über eine Halteeinrichtung (17) verbunden ist.

## Beschreibung

Die Erfindung bezieht sich auf eine Sonnenblende für Fahrzeuge mit einem Sonnenblendenkörper, der wenigstens eine mit einer am Fahrzeugrahmen befestigten Halteeinrichtung zusammenwirkende Lagereinrichtung umfasst, sowie ein Verstärkungselement zur Stabilisierung dieses Sonnenblendenkörpers.

Es sind dazu aus dem Stand der Technik eine Vielzahl derartiger Sonnenblenden bekannt. Bei diesen bekannten Ausführungsformen umfasst ein umlaufender Verstärkungsrahmen die Blendenscheibe der Sonnenblende, wobei diese Sonnenblende in der Regel planar gefertigt wird. Dieser Verstärkungsrahmen kann dabei beispielsweise aus Aluminium bestehen. Es sind dabei gewöhnlich an diesem Verstärkungsrahmen Halteelemente über eine Lagereinrichtung beweglich angebracht, wobei diese Halteelemente oder Halteeinrichtung am Fahrzeugrahmen befestigt sind. Durch diesen beweglich gelagerten Verstärkungsrahmen der Sonnenblende wird die Möglichkeit geschaffen, die Sonnenblende in ihrer Position zu drehen und in den verschiedenen Neigungswinkeln eine Anpassung an den jeweiligen Sonnenstand vorzunehmen. Bzgl. des Standes der Technik sei dazu beispielhaft auf die DE 198 57 454 A1 verwiesen. In diesem Fall ist die Lagereinrichtung des Sonnenblendenkörpers der Sonnenblende derart ausgebildet, dass es ermöglicht wird, den Sonnenblendenkörper aus einer Nichtgebrauchslage oberhalb der Fahrzeugwindschutzscheibe in eine erste Gebrauchslage vor der Windschutzscheibe zu klappen und es ferner ermöglicht wird, den Sonnenblendenkörper in eine zweite Gebrauchslage vor eine Fahrzeugseitenscheibe zu verschwenken. Die aus dem Stand der Technik bekannten Sonnenblenden weisen eine Reihe von Nachteilen auf, so stellen diese insbesondere eine sehr kostenintensive Lösung dar, bedingt durch den benötigten Verstärkungsrahmen, und zwar einerseits bzgl. der Werkzeugkosten sowie andererseits auch der Montage der Sonnenblende. Bei den bekannten Ausführungsformen werden außerdem in der Regel nur planare Blendenscheiben verarbeitet, die auch meist nur eine geringe Abdeckungsfläche aufweisen. Weiterhin nachteilig ist bei den bekannten Ausführungsformen, dass die Seitenbereiche oftmals nur unzureichend oder gar nicht abgedeckt werden können. Durch die meist planare Ausbildung der Sonnenblenden ist außerdem nur eine zweidimensionale Abdeckung möglich. Wünschenswert ist es deshalb, die bekannten Ausführungsformen von Sonnenblenden dahingehend zu verbessern.

Ausgehend von diesen bekannten Sonnenblenden liegt der Erfindung die Aufgabe zu Grunde, die bekannten Sonnenblenden unter Beibehaltung der bisherigen Vorteile in der Weise zu verbessern bzw. weiter zu entwickeln, dass die zuvor genannten Nachteile der genannten Ausführungsformen vermieden werden, wobei insbesondere eine einfachere und kostengünstigere Herstellung und Montage als bisher ermöglicht werden soll, weiterhin sollen die Funktionseigenschaften der gewünschten Sonnenblende deutlich verbessert werden. Die gewünschte Anordnung soll dabei insbesondere auch einfach im Aufbau sein und möglichst einfach und flexibel in dem betreffenden Fahrzeug angebracht werden können.

Die Aufgabe wird erfindungsgemäß dadurch gelöst, dass der Sonnenblendenkörper als rahmenloser Sonnenblendenkörper mit wenigstens einem randseitig angebrachten, insbesondere aufgesteckten Lagerelement ausgebildet ist, wobei dieses Lagerelement an einer ersten Seite zur Aufnahme der am Fahrzeugrahmen befestigten Halteeinrichtung und an der anderen Seite zur Aufnahme eines sich längs des rahmenlosen Sonnenblendenkörpers erstreckenden Stabilisierungselementes als Verstärkungselement ausgebildet ist, wobei das Stabilisierungselement im Bereich seines dem Lagerelement diametral gegenüberliegenden Endes mit dem rahmenlosen Sonnenblendenkörper über eine Halteeinrichtung verbunden ist. Auf diese Weise wird erstmalig mit einfachen Mitteln die Möglichkeit geschaffen, eine Sonnenblende für ein Fahrzeug bereitzustellen, die ohne die Verwendung eines zusätzlichen Verstärkungsrahmens für den Sonnenblendenkörper an dem betreffenden Fahrzeug angebracht werden kann. Der wirtschaftliche Vorteil besteht dabei insbesondere darin, dass durch das Weglassen des Verstärkungsrahmens keine entsprechenden Werkzeuge benötigt werden, außerdem ergibt sich eine einfachere Montage. Es wird dabei bei der erfindungsgemäßen Sonnenblende die Stabilisierungsfunktion in einfacher Weise durch das in dem Lagerelement befindliche sich längs des rahmenlosen Sonnenblendenkörpers erstreckende Stabilisierungselement erreicht. Weiterhin ist durch die erfindungsgemäße Ausgestaltung eine dreidimensionale Ausbildung des Sonnenblendenkörpers möglich, es ist praktisch jegliche Verformung des Sonnenblendenkörpers möglich, so dass die erfindungsgemäße Sonnenblende einfach und sehr flexibel an die heutigen meist gebogen ausgebildeten Fahrzeugscheiben angepasst werden kann.

Bei der bevorzugten Ausführungsform der vorliegenden Erfindung besteht dabei das Lagerelement aus zwei unabhängigen Lagerelementteilen, einem für die am Fahrzeugrahmen befestigte Halteeinrichtung und einem für das Stabilisierungselement. Dabei ist in bevorzugter Ausgestaltung vorgesehen, dass das Lagerelementteil für die am Fahrzeugrahmen befestigte Halteeinrichtung als Drehlager ausgebildet ist, weiterhin ist bevorzugt vorgesehen, dass das Lagerelementteil für das Stabilisierungselement als Gleitlager ausgebildet ist. Es wird dadurch eine zweifache Nutzungsfunktion des jeweiligen Lagerelements erzielt, und zwar zum einen als Drehlager in Bezug auf die am Fahrzeugrahmen befestigte Halteeinrichtung, und davon unabhängig als Gleitlager für das in dem Lagerelement befindliche Stabilisierungselement.

Nach einem weiteren Merkmal der vorliegenden Erfindung ist vorgesehen, dass der rahmenlose Sonnenblendenkörper an einer Seite der am Fahrzeugrahmen befestigten Halteeinrichtung ein Lagerelement mit darin angeordnetem Stabilisierungselement umfasst, wobei hier wahlweise die rechte oder linke Seite vorgesehen werden kann.

Bei einer davon abweichenden Ausführungsform der vorliegenden Erfindung ist vorgesehen, dass der rahmenlose Sonnenblendenkörper an beiden Seiten der am Fahrzeugrahmen befestigten Halteeinrichtung ein Lagerelement mit daran angeordnetem Stabilisierungselement umfasst.

Es empfiehlt sich nach einem weiteren Merkmal der vorliegenden Erfindung, dass der rahmenlose Sonnenblendenkörper ein- oder beidseitig gebogen ausgebildet ist. Dadurch ist eine flexible Anpassung an die heutigen gebogen ausgebildeten Fahrzeugscheiben problemlos möglich. Dabei kann in einer ersten Ausführungsform der rahmenlose Sonnenblendenkörper ein- oder beidseitig gerade gebogen ausgebildet sein, in einer davon abweichenden Ausführungsform kann aber auch der rahmenlose Sonnenblendenkörper ein- oder beidseitig sphärisch gebogen ausgebildet sein.

Nach einem weiteren Merkmal der vorliegenden Erfindung ist vorgesehen, dass der rahmenlose Sonnenblendenkörper ein- oder beidseitig im jeweiligen Lagerelement abgeknickt ausgebildet ist. Es wird dadurch die flexible Anbringbarkeit in dem betreffenden Fahrzeug weiterhin erhöht, wobei für diese Abknickung Winkelstellungen bis zu 90° möglich sind.

Es empfiehlt sich nach einem weiteren Merkmal der vorliegenden Erfindung, dass der rahmenlose Sonnenblendenkörper planar ausgebildet ist. Es ist dadurch für die erfindungsgemäße Sonnenblende auch eine herkömmliche Verwendung möglich.

Nach einem weiteren Merkmal der vorliegenden Erfindung ist vorgesehen, dass der rahmenlose Sonnenblendenkörper opak ausgebildet ist. In davon abweichender Ausgestaltung kann aber auch vorgesehen sein, dass der rahmenlose Sonnenblendenkörper transparent oder auch semitransparent ausgebildet ist. Die Art der Ausbildung der erfindungsgemäßen Sonnenblende wird dabei jeweils von dem verwendeten Einsatzort abhängig sein.

Nach einem weiteren Merkmal der vorliegenden Erfindung ist vorgesehen, dass der rahmenlose Sonnenblendenkörper skelettlos ausgebildet ist. In davon abweichender Ausgestaltung kann nach einem letzten Merkmal der vorliegenden Erfindung aber auch vorgesehen sein, dass der rahmenlose Sonnenblendenkörper in Sandwichbauweise ausgebildet ist. Eine derartige Sandwichbauweise wird heutzutage häufig gefertigt, die Sonnenblende besteht dabei aus einem Drahtskelett, belegt mit Pappen zur Versteifung sowie Schaum und einer Folienkaschierung.

Die Erfindung ist in den Figuren der Zeichnung in mehreren Ausführungsbeispielen dargestellt. Es zeigen:
- Fig. 1: eine schematische Darstellung der erfindungemäßen Sonnenblende in einer ersten Ausführungsform mit gebogen ausgebildetem Sonnenblendenkörper,
- Fig. 2: eine schematische Darstellung der erfindungsgemäßen Sonnenblende in einer zweiten Ausführungsform mit abgeknickt ausgebildetem Sonnenblendenkörper.
- Fig. 3: eine schematische Darstellung einer Sonnenblende gemäß dem Stand der Technik.

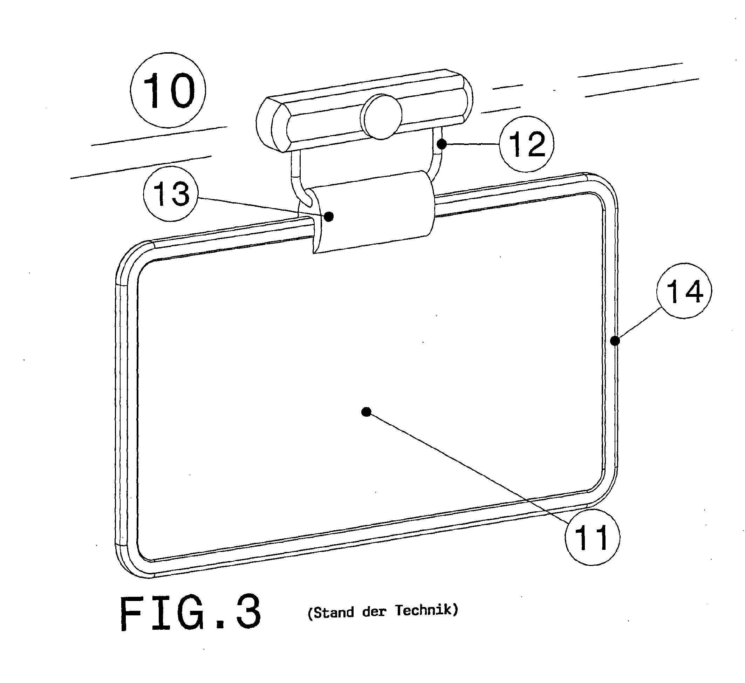

Die erfindungsgemäße Sonnenblende ist generell mit 10 bezeichnet, und ist vorgesehen für eine Verwendung in Fahrzeugen. Die erfindungsgemäße Sonnenblende 10 umfasst einen mit 11 bezeichneten Sonnenblendenkörper, der wenigstens eine mit einer am Fahrzeugrahmen befestigten Halteeinrichtung 12 zusammenwirkende Lagereinrichtung 13 umfasst, sowie ein Verstärkungselement 14 zur Stabilisierung dieses Sonnenblendenkörpers 11. Es ist dazu in der Fig. 3 der Zeichnung eine Sonnenblende 10 für Fahrzeuge gemäß dem Stand der Technik dargestellt. In diesem Fall umfasst die Sonnenblende 10 einen Sonnenblendenkörper 11 mit einem umlaufenden Verstärkungselement 14, es ist dabei an diesem Verstärkungselement 14 eine Lagereinrichtung 13 angeordnet, die mit einer am Fahrzeugrahmen befestigten Halteeinrichtung 12 zusammenwirkt. Dieser Fahrzeugrahmen ist in der Fig. 3 der Zeichnung nur in angedeuteter Weise dargestellt und nicht separat bezeichnet. Mit dieser beweglichen Anbringung des Sonnenblendenkörpers 11 über die Lagereinrichtung 13 an der Halteeinrichtung 12 wird die Möglichkeit geschaffen, die Sonnenblende 11 in ihrer Position zu drehen und in verschiedenen Neigungswinkeln eine Anpassung an den jeweiligen Sonnenstand vorzunehmen. Bei den bekannten Ausführungsformen ist dabei der Sonnenblendenkörper 11 planar ausgebildet, weiterhin kann das umlaufende Verstärkungselement 14 aus Aluminium bestehen.

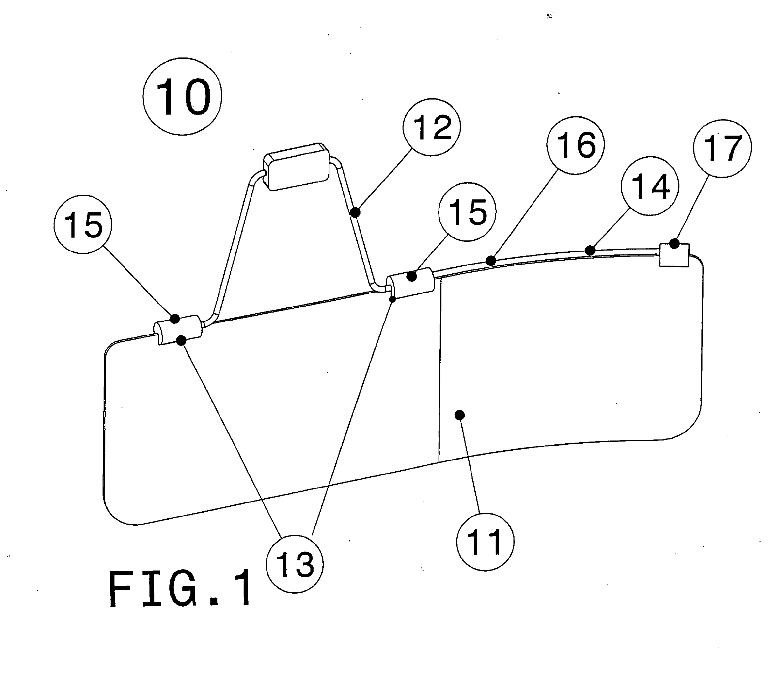

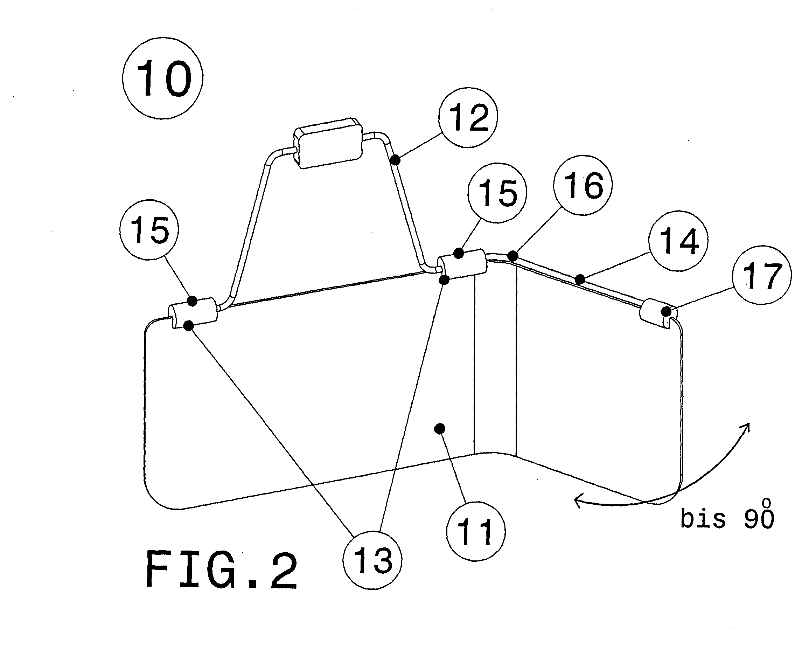

Bei der erfindungsgemäßen Sonnenblende 10 ist nun demgegenüber vorgesehen, siehe dazu die Figuren 1 und 2 der Zeichnung, dass der Sonnenblendenkörper 11 als rahmenlosen Sonnenblendenkörper 11 mit wenigstens einem, in diesem Fall an jeder Seite einem randseitig angebrachten, in diesem Fall aufgesteckten Lagerelement 15 ausgebildet ist, wobei dieses Lagerelement 15 an einer ersten Seite zur Aufnahme der am Fahrzeugrahmen befestigten Halteeinrichtung 12 und an der anderen Seite zur Aufnahme eines sich längs des rahmenlosen Sonnenblendenkörpers 11 erstreckenden Stabilisierungselements 16 als Verstärkungselement 14 ausgebildet ist, wobei das Stabilisierungselement 16 im Bereich seines dem Lagerelement 15 diametral gegenüberliegenden Endes mit dem rahmenlosen Sonnenblendenkörper 11 über eine Halteeinrichtung 17 verbunden ist. Der Vorteil einer derart ausgebildeten Sonnenblende 10 liegt insbesondere darin, dass kein umlaufendes Verstärkungselement für den Sonnenblendenkörper 11 mehr vorgesehen werden muss, so dass auch keine entsprechenden Werkzeuge mehr benötigt werden. Es ergibt sich dadurch insbesondere eine einfachere Herstellung sowie auch eine einfachere Montage. Es wird dabei die Stabilisierungsfunktion des Sonnenblendenkörpers 11 in einfacher Weise über das in dem Lagerelement 15 befindliche Stabilisierungselement 16 erreicht: Dabei ist durch die rahmenlose Ausgestaltung des Sonnenblendenkörpers 11 auch in einfacher Weise eine dreidimensionale Ausbildung möglich, es ist dabei jegliche Verformung des Sonnenblendenkörpers 11 möglich, so dass eine einfache Anpassung an die heutzutage zumeist gebogen ausgebildeten Fahrzeugscheiben möglich ist. Der Sonnenblendenkörper 11 kann dabei in bevorzugter Ausgestaltung beispielsweise aus Plexiglas bestehen.

Bei der erfindungsgemäßen Sonnenblende 10 besteht das Lagerelement 15 aus zwei unabhängigen Lagerelementteilen, einem für die am Fahrzeugrahmen befestigte Halteeinrichtung 12 und einem für das Stabilisierungselement 16, siehe dazu beispielsweise die Fig. 1 der Zeichnung mit einem gebogen ausgebildeten Sonnenblendenkörper 11. Es ist dabei, ebenso wie bei der Ausführungsform gemäß der Fig. 2 der Zeichnung, das Lagerelementteil für die am Fahrzeugrahmen befestigte Halteeinrichtung 12 als Drehlager ausgebildet, weiterhin ist das Lagerelementteil für das Stabilisierungselement 16 als Gleitlager ausgebildet. Auf diese Weise wird eine Doppelfunktion für das Lagerelement 15 der erfindungsgemäßen Sonnenblende 10 erreicht, und zwar zum einen als Drehlager in Bezug auf die an dem Fahrzeugrahmen befestigte Halteeinrichtung 12 und zum anderen als Gleitlager für das Stabilisierungselement 16 des Sonnenblendenkörpers 11.

Bei der erfindungsgemäßen Sonnenblende 10 kann vorgesehen sein, dass der rahmenlose Sonnenblendenkörper 11 an einer Seite der am Fahrzeugrahmen befestigten Halteeinrichtung 12 ein Lagerelement 15 mit darin angeordnetem Stabilisierungselement 16 umfasst. Es kann dabei entweder die rechte oder auch die linke Seite des Sonnenblendenkörpers 11 vorgesehen werden. Demgegenüber umfasst bei den in den Fig. 1 und 2 der Zeichnung dargestellten Ausführungsformen der rahmenlose Sonnenblendenkörper 11 an beiden Seiten der am Fahrzeugrahmen befestigten Halteeinrichtung 12 ein Lagerelement 15 mit daran angeordnetem Stabilisierungselement 16. Der hier gezeigte Sonnenblendenkörper 11 weist also zwei Drehlager in Bezug auf die an dem Fahrzeugrahmen befestigte Halteeinrichtung 12 auf. Das Stabilisierungselement 16 ist dabei auf jeder Seite über die Halteeinrichtung 17 mit dem Sonnenblendenkörper 11 verbunden, so dass sich dieser beim Hin- und Herschwenken in Bezug auf die Halteeinrichtung 12 dreht. Da das Lagerelement 15 in Bezug auf das jeweilige Stabilisierungselement 16 als Gleitlager ausgebildet ist, ist es möglich, unabhängig von dem mit der Halteeinrichtung 12 in Wirkverbindung stehenden, als Drehlager ausgebildeten Lagerelementteil jenseits des Lagerelements 15 unterschiedlich ausgebildete Teilbereiche von Sonnenblendenkörpern 11 auszubilden. Es ergeben sich dabei unterschiedliche Möglichkeiten:
In dem in der Fig. 1 der Zeichnung dargestellten Ausführungsbeispiel ist der rahmenlose Sonnenblendenkörper 11 beidseitig gebogen ausgebildet, dieser kann selbstverständlich auch nur einseitig gebogen ausgebildet sein. In dem dargestellten Ausführungsbeispiel ist der rahmenlose Sonnenblendenkörper 11 gerade gebogen ausgebildet, es ist aber auch möglich, dass der rahmenlose Sonnenblendenkörper 11 sphärisch gebogen ausgebildet ist.

Bei dem in der Fig. 2 der Zeichnung dargestellten Ausführungsbeispiel der erfindungsgemäßen Sonnenblende 10 ist der rahmenlose Sonnenblendenkörper 11 beidseitig im jeweiligen Lagerelement 15 abgeknickt ausgebildet, es ist aber auch möglich, nur eine einseitig ausgebildete Abknickung vorzusehen. Für diese Abknickung sind dabei Winkelstellungen bis zu 90° möglich. Es muss dabei bei diesem in der Fig. 2 der Zeichnung dargestellten Ausführungsbeispiel das Stabilisierungselement 16 für die Länge seines Eintauchens in das Lagerelement 15 gerade sein und diesem Lagerelement folgen; ein Abknicken oder Biegen des Stabilisierungselements 16 kann deshalb nur außerhalb des Lagerelements 15 erfolgen.

In Abweichung der in den Figuren der Zeichnung dargestellten Ausführungsformen kann die erfindungsgemäße Sonnenblende 10 aber auch derart ausgebildet sein, dass der rahmenlose Sonnenblendenkörper 11 planar ausgebildet ist. Die erfindungsgemäße Sonnenblende 10 kann also auch in der herkömmlichen Weise eingesetzt werden.

Der rahmenlose Sonnenblendenkörper 11 der erfindungsgemäßen Sonnenblende 10 kann je nach Bedarfsfall unterschiedlich ausgebildet sein, vorgesehen ist insbesondere, dass der rahmenlose Sonnenblendenkörper 11 opak, transparent oder semitransparent ausgebildet ist.

Es ist weiterhin vorgesehen, siehe auch die in den Figuren 1 und 2 der Zeichnung dargestellten Ausführungsformen der erfindungsgemäßen Sonnenblende 10, dass deren rahmenloser Sonnenblendenkörper 11 skelettlos ausgebildet ist. In Abweichung davon kann aber auch vorgesehen sein, dass der rahmenlose Sonnenblendenkörper 11 in Sandwichbauweise ausgebildet ist, in diesem Fall ist der Sonnenblendenkörper 11 aus einem Drahtskelett gefertigt, belegt mit Pappe zur Versteifung sowie Schaum und einer Folienkaschierung. In Abweichung davon ist es aber auch möglich, jede mögliche Art eines Sonnenblendenkörpers 11 für die erfindungsgemäße Sonnenblende 10 vorzusehen.

Die erfindungsgemäße Sonnenblende 10 hat dabei neben dem Vorteil, dass durch das Weglassen des umlaufenden Verstärkungselements 14 eine einfachere Fertigung und Montage erzielt wird, den Vorteil, dass durch die erfindungsgemäße Ausbildung eine einfache Anpassung an dreidimensionale Formen durchgeführt werden kann, so dass eine flexible Anpassung an die heute beispielsweise oft gebogen ausgebildeten Fahrzeugscheiben möglich ist. Die Stabilisierungsfunktion wird dabei in einfacher Weise von dem in dem Lagerelement 15 befindlichen Stabilisierungselement 16 übernommen.

Wie bereits erwähnt, sind die dargestellten Ausführungsformen nur beispielsweise Verwirklichungen der Erfindung. Diese ist nicht darauf beschränkt, es sind vielmehr noch mancherlei Abänderungen und Ausbildungen möglich. So sind insbesondere Abwandlungen in der konstruktiven Ausbildung des Sonnenblendenkörpers 11 der erfindungsgemäßen Sonnenblende 10 möglich, weiterhin denkbar sind selbstverständlich auch Abwandlungen in der Ausbildung des Lagerelements 15 und des Stabilisierungselements 16 sowie Abwandlungen in deren Anbringung an dem Sonnenblendenkörper 11.

### Bezugszeichenliste:

- 10: Sonnenblende
- 11: Sonnenblendenkörper
- 12: Halteeinrichtung (am Fahrzeugrahmen)
- 13: Lagereinrichtung (von 11)
- 14: Verstärkungselement (von 11)
- 15: Lagerelement (an 11)
- 16: Stabilisierungselement (von 11)
- 17: Halteeinrichtung (an 11 für 16)

## Patentansprüche

1. Sonnenblende (10) für Fahrzeuge mit einem Sonnenblendenkörper (11), der wenigstens eine mit einer am Fahrzeugrahmen befestigten Halteeinrichtung (12) zusammenwirkende Lagereinrichtung (13) umfasst, sowie ein Verstärkungselement (14) zur Stabilisierung dieses Sonnenblendenkörpers (11), **dadurch gekennzeichnet, dass** der Sonnenblendenkörper (11) als rahmenloser Sonnenblendenkörper (11) mit wenigstens einem randseitig angebrachten, insbesondere aufgesteckten Lagerelement (15) ausgebildet ist, wobei dieses Lagerelement (15) an einer ersten Seite zur Aufnahme der am Fahrzeugrahmen befestigten Halteeinrichtung (12) und an der anderen Seite zur Aufnahme eines sich längs des rahmenlosen Sonnenblendenkörpers (11) erstreckenden Stabilisierungselements (16) als Verstärkungselement (14) ausgebildet ist, wobei das Stabilisierungselement (16) im Bereich seines dem Lagerelement (15) diametral gegenüberliegenden Endes mit dem rahmenlosen Sonnenblendenkörper (11) über eine Halteeinrichtung (17) verbunden ist.

2. Sonnenblende nach Anspruch 1, **dadurch gekennzeichnet, dass** das Lagerelement (15) aus zwei unabhängigen Lagerelementteilen, einem für die am Fahrzeugrahmen befestigte Halteeinrichtung (12) und einem für das Stabilisierungselement (16), besteht.

3. Sonnenblende nach Anspruch 2, **dadurch gekennzeichnet, dass** das Lagerelementteil für die am Fahrzeugrahmen befestigte Halteeinrichtung (12) als Drehlager ausgebildet ist.

4. Sonnenblende nach Anspruch 2 oder 3, **dadurch gekennzeichnet, dass** das Lagerelementteil für das Stabilisierungselement (16) als Gleitlager ausgebildet ist.

5. Sonnenblende nach einem der Ansprüche 1 bis 4, **dadurch gekennzeichnet, dass** der rahmenlose Sonnenblendenkörper (11) an einer Seite der am Fahrzeugrahmen befestigten Halteeinrichtung (12) ein Lagerelement (15) mit darin angeordnetem Stabilisierungselement (16) umfasst.

6. Sonnenblende nach einem der Ansprüche 1 bis 4, **dadurch gekennzeichnet, dass** der rahmenlose Sonnenblendenkörper (11) an beiden Seiten der am Fahrzeugrahmen befestigten Halteeinrichtung (12) ein Lagerelement (15) mit darin angeordnetem Stabilisierungselement (16) umfasst.

7. Sonnenblende nach einem der Ansprüche 1 bis 6, **dadurch gekennzeichnet, dass** der rahmenlose Sonnenblendenkörper (11) ein- oder beidseitig gebogen ausgebildet ist.

8. Sonnenblende nach Anspruch 7, **dadurch gekennzeichnet, dass** der rahmenlose Sonnenblendenkörper (11) ein- oder beidseitig gerade gebogen ausgebildet ist.

9. Sonnenblende nach Anspruch 7, **dadurch gekennzeichnet, dass** der rahmenlose Sonnenblendenkörper (11) ein- oder beidseitig sphärisch gebogen ausgebildet ist.

10. Sonnenblende nach einem der Ansprüche 1 bis 6, **dadurch gekennzeichnet, dass** der rahmenlose Sonnenblendenkörper (11) ein- oder beidseitig im jeweiligen Lagerelement (15) abgeknickt ausgebildet ist.

11. Sonnenblende nach einem der Ansprüche 1 bis 6, **dadurch gekennzeichnet, dass** der rahmenlose Sonnenblendenkörper (11) planar ausgebildet ist.

12. Sonnenblende nach einem der Ansprüche 1 bis 11, **dadurch gekennzeichnet, dass** der rahmenlose Sonnenblendenkörper (11) opak ausgebildet ist.

13. Sonnenblende nach einem der Ansprüche 1 bis 11, **dadurch gekennzeichnet, dass** der rahmenlose Sonnenblendenkörper (11) transparent ausgebildet ist.

14. Sonnenblende nach einem der Ansprüche 1 bis 11, **dadurch gekennzeichnet, dass** der rahmenlose Sonnenblendenkörper (11) semitransparent ausgebildet ist.

15. Sonnenblende nach einem der Ansprüche 1 bis 14, **dadurch gekennzeichnet, dass** der rahmenlose Sonnenblendenkörper (11) skelettlos ausgebildet ist.

16. Sonnenblende nach einem der Ansprüche 1 bis 14, **dadurch gekennzeichnet, dass** der rahmenlose Sonnenblendenkörper (11) in Sandwichbauweise ausgebildet ist.
